# EUROPÄISCHE PATENTSCHRIFT

(11) **EP 1 549 517 B1**
(45) Veröffentlichungstag und Bekanntmachung des Hinweises auf die Patenterteilung: **09.01.2008**
(21) Anmeldenummer: 03799414.2
(22) Anmeldetag: 01.10.2003
(51) Int. Cl.: B60H 1/32

(54) **VERFAHREN ZUR REGELUNG EINER KLIMAANLAGE**
METHOD FOR REGULATING AN AIR CONDITIONER
PROCEDE DE REGLAGE D'UNE INSTALLATION DE CLIMATISATION

(30) Priorität: 02.10.2002 DE 10246245
(43) Veröffentlichungstag der Anmeldung: 06.07.2005
(73) Patentinhaber: Behr GmbH & Co. KG, 70469 Stuttgart (DE)
(72) Erfinder: MÖLLERT, Thorsten, 70376 Stuttgart (DE)
(74) Vertreter: Grauel, Andreas
(86) Internationale Anmeldenummer: PCT/EP2003/010865
(87) Internationale Veröffentlichungsnummer: WO 2004/033237

(56) Entgegenhaltungen:
- EP-A- 0 899 135
- DE-A- 10 201 466
- US-A- 4 856 293
- US-A- 5 335 514
- PATENT ABSTRACTS OF JAPAN vol. 014, no. 056 (M-0929), 31. Januar 1990 (1990-01-31) & JP 01 282015 A (SANDEN CORP), 13. November 1989 (1989-11-13)

## Beschreibung

Die Erfindung betrifft ein Verfahren zur Regelung einer Klimaanlage, insbesondere für ein Kraftfahrzeug, gemäß dem Oberbegriff des Anspruchs 1.

Bei Verdampfern von Klimaanlagen kommt es zu Vereisungen in Folge von im Verdampfer kondensierter Luftfeuchtigkeit, die bei niedrigen Temperaturen gefriert, so dass der Verdampfer seine Funktion nur noch bedingt oder im Extremfall gar nicht mehr erfüllen kann.

Dabei wird die maximal mögliche Kälteleistung von einem vorbestimmten Abschalt- oder Regelpunkt der Kompressoransteuerung beeinflusst. Um zu garantieren, dass der Verdampfer eisfrei bleibt, müssen sichere, sogenannte Setpoints gewählt werden, welche die Ausnutzung der maximalen Leistung verhindern. Beispielsweise werden als feste Setpoints 2°C als Abschalttemperatur und 5°C als Einschalttemperatur bei einem getakteten Kompressor gewählt.

Nachteilig an einem derartigen Verfahren ist, dass, um die Eisfreiheit des Verdampfers in allen Betriebspunkten zu gewährleisten, ein Sicherheitszuschlag berücksichtigt werden muss, d.h. die Temperaturen müssen höher gewählt werden. Dadurch wird die Nutzung der maximal zur Verfügung stehenden Kälteleistung begrenzt.

Ferner sind Regelungsverfahren von extern ansteuerbaren Kompressoren in Abhängigkeit von einer Fühlertemperatur nach dem Verdampfer bekannt. Eine derartige Regelung lässt jedoch noch Wünsche offen.

Die Druckschrift US 4856293 offenbart ein Verfahren zur Regelung einer Klimaanlage bei der die Temperatur im luftseitigen Bereich des Verdampfers gemessen wird und damit die Regelung der Klimaanlage erfolgt.

Es ist Aufgabe der Erfindung, ein verbessertes Verfahren zur Verfügung zu stellen.

Diese Aufgabe wird gelöst durch ein Verfahren mit den Merkmalen des Anspruchs 1. Vorteilhafte Ausgestaltungen sind Gegenstand der Unteransprüche.

Gemäß dem erfindungsgemäßen Verfahren wird eine Temperatur im luftseitigen Bereich des Verdampfers in zeitlichen Abständen gemessen und anhand mehrerer dieser zeitlich aufeinanderfolgenden Temperaturmessungen erfolgt die Regelung der Klimaanlage. Dies ermöglicht eine Überwachung des Verdampfers, so dass ein Vereisen durch rechtzeitiges, in der Regel kurzzeitiges, Ausschalten des Kompressors oder kurzzeitiges Anheben des Saugdruckes im Kompressor verhindert wird. Eine derartige Regelung optimiert die Ausnutzung der Klimaanlage unter Verhinderung einer Vereisung des Verdampfers. Die zur Verfügung stehende Kälteleistung muss nicht wie bisher durch Sicherheitszuschläge begrenzt werden. Hierbei ist in aller Regel keine zusätzliche Hardware, die normalerweise mit konstruktiven Änderungen verbunden ist, erforderlich. Vielmehr ist ausschließlich eine entsprechende Software und gegebenenfalls ein leicht abgeänderter Prozessor erforderlich.

Vorzugsweise erfolgt die Temperaturmessungen in regelmäßigen Zeitabständen, vorzugsweise alle 5 Sekunden bis 1 Minute, insbesondere 10 bis 15 Sekunden.

Vorzugsweise erfolgt die erfindungsgemäße Regelung des Kompressors anhand der Temperatur-Messdaten, wenn die gemessenen Temperaturen in einem vorgegebenen Temperaturbereich liegen, d.h. die gemessenen Temperaturen bei oder unter einem Einschaltpunkt und/oder bei oder oberhalb von einem Abschaltpunkt liegen. Vorzugsweise liegt der Einschaltpunkt bei einer Temperatur von 5°C +/- 1 K und/oder der Ausschaltpunkt bei einer Temperatur von 2°C +/- 1 K.

Für eine besonders einfache Regelung wird als relevante Temperatur lediglich die minimal gemessene Temperatur verwendet. Hierbei wird die Zeit unter Berücksichtigung der seit Beginn der Zeitmessung minimalen gemessenen Temperatur mit entsprechenden Vergleichswerten verglichen und bei Erreichen einer vorbestimmten, für diese minimale gemessene Temperatur relevanten Zeit erfolgt die Regelung der Klimaanlage zur Verhinderung eines Vereisens derselben (Zeitlogik).

Gemäß einem alternativen Verfahren erfolgt eine Wertung der Zeit unter Berücksichtigung der Temperatur anhand einer gespeicherten, vorgegebenen Tabelle oder Funktion, welche von der Temperatur abhängig ist. Dies verbessert die Regelung.

Gemäß einem weiteren, alternativen Verfahren erfolgt eine Wertung jeder gemessenen Temperatur entsprechend einem in einer vorgegebenen Tabelle gespeicherten Temperaturintervall, einer in einer vorgegebenen Tabelle gespeicherten entsprechenden Temperatur oder einer Funktion zu einem gewerteten Messergebnis. Die einzelnen gewerteten Messergebnisse werden nach jeder Temperaturmessung und Wertung aufaddiert, wobei bei Erreichen der Summe der gewerteten Messergebnisse eines vorbestimmten Wertes die Regelung der Klimaanlage erfolgt.

Vorzugsweise wird die Summe der gewerteten Messergebnisse nach einer vorbestimmten Zeit gelöscht, wenn über diese vorbestimmte Zeit hinweg keine Änderung der Summe erfolgt, insbesondere wenn die gemessene Temperatur über einem vorbestimmten Grenzwert liegt. Dies ermöglicht eine weitere Optimierung der Regelung.

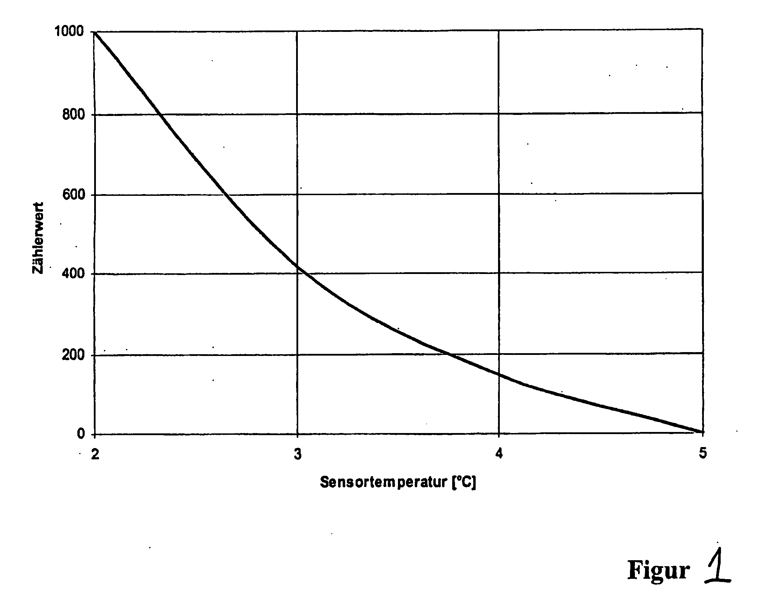

Im Folgenden wird die Erfindung anhand zweier Ausführungsbeispiele und einer Vielzahl von Varianten teilweise unter Bezugnahme auf die Zeichnung im Einzelnen erläutert. Die einzige Figur zeigt ein zum zweiten Ausführungsbeispiel gehörendes Diagramm, das einen Zählerwert über einer Sensortemperatur darstellt.

Eine erfindungsgemäß geregelte Klimaanlage für ein Kraftfahrzeug gemäß dem ersten Ausführungsbeispiel weist zur Vermeidung einer Vereisung des Verdampfers eine zeitabhängige Regelung auf (Zeitlogik). Hierbei sind gemäß dem vorliegenden Ausführungsbeispiel eingangs, d.h. bei einem Start des Fahrzeugs nach einem längeren Stillstand, die Setpoints Tₛ mit 2,0°C Abschaltpunkt T_{Saus} und 5,0°C Einschaltpunkt T_{Sein} vorgegeben.

Ferner ist am Verdampfer ein Temperatursensor angeordnet, welcher die Temperatur Tᵥ im luftseitigen Bereich des Verdampfers misst. Die gemessene Temperatur Tᵥ des Verdampfers wird bei Unterschreiten des Einschaltpunktes T_{Sein} in Abhängigkeit von der Zeit t aufgezeichnet. Dabei erfolgen in aller Regel Temperaturänderungen nur langsam, wenn keine Betriebsänderung der Klimaanlage erfolgt. Hierbei ist eine entsprechende Regellogik vorgesehen, welche die minimal gemessene Temperatur T_{Vmin} in Abhängigkeit der insgesamt gemessenen Zeit t ab Erreichen des Einschaltpunktes T_{Sein}, mit vorgegebenen Vergleichswerten vergleicht und entsprechend den Kompressor regelt.

Beträgt beispielsweise die minimal gemessene Temperatur T_{Vmin} des Verdampfers nach mehr als 10 Minuten nach Erreichen des Einschaltpunktes T_{Sein} 3,0°C oder nach mehr als 20 Minuten nach Erreichen des Einschaltpunktes T_{Sein} 3,5°C, so wird der Kompressor gemäß dem vorliegenden Ausführungsbeispiel für jeweils 10 Sekunden abgeschaltet.

Gemäß einer weiteren Variante weist die Regellogik ferner einen löschbaren Speicher auf, der für eine gewisse, vorbestimmte Zeit die gemessene Zeit t, welche nach Erreichen des Einschaltpunktes T_{Sein} verstrichen ist, und die minimal erreichte Temperatur T_{Vmin} speichert, wenn der Kompressor nicht abgeschaltet wurde, und diese Zeit t und vorzugsweise auch die minimale Temperatur T_{Vmin}, bei einem erneuten Erreichen des Einschaltpunktes T_{Sein} berücksichtigt, d.h. die Zeit t läuft dann weiter, wobei die minimale Temperatur T_{Vmin} bei erreichen einer neuen minimalen Temperatur T_{Vmin} aktualisiert wird.

Gemäß einer weiteren Variante sind in der Regelung zwischen dem Abschaltpunkt T_{Saus} bei 2,0°C und dem Einschaltpunkt T_{Sein} bei 5,0°C Temperaturintervalle ΔT, beispielsweise mit einer Intervallbreite von 0,5°K, vorgesehen. Dabei entsprechen die einzelnen Temperaturintervalle ΔT einer vorgegebenen Wertigkeit, d.h. wenn die Temperatur Tᵥ in einem der Temperaturintervalle ΔT liegt, so wird die Zeit Δt, während der die Temperatur Tᵥ in diesem Temperaturintervall ΔT liegt, mit einem der Wertigkeit entsprechenden Wert multipliziert, so dass sich eine Messgröße M ergibt, und diese Messgröße M wird zu den vorhergehenden Messgrößen M, im Folgenden als Summe der Messgrößen S_{M} bezeichnet, addiert.

Das Ergebnis der Multiplikation Zeit Δt × Faktor f und anschließenden Addition, d.h. die aktuelle Summe der Messgrößen S_{M}, wird gemäß dem vorliegenden Ausführungsbeispiel alle 10 Sekunden, d.h. entsprechend den Temperaturmessungen, mit einem vorgegebenen Schwellwert S verglichen, der festlegt, ob ein Abschalten des Kompressors erforderlich ist. Wird der Schwellwert S erreicht, so erfolgt eine Abschaltung des Kompressors für eine vorbestimmte Zeit, vorliegend für 10 Sekunden. Die Summe der Messgrößen S_{M} wird bei einer Abschaltung auf Null gesetzt.

Erhöht sich die Temperatur Tᵥ auf einen oberhalb des Einschaltpunktes T_{Sein} liegenden Wert solange der Schwellwert S nicht erreicht wurde, so wird die Summe der Messgrößen S_{M} für eine gewisse, vorbestimmte Zeit gespeichert. Gemäß einer alternativen Variante wird die Summe der Messgrößen S_{M} bei Erreichen der Temperatur Tᵥ einer deutlich über dem Einschaltpunkt T_{Sein} liegenden Temperatur Tᵣₑₛₑₜ auf Null gesetzt. Bei erneutem Unterschreiten des Einschaltpunktes T_{Sein} durch die Temperatur Tᵥ wird die alte Summe der Messgrößen S_{M}, die gegebenenfalls zwischenzeitlich auch auf Null gesetzt worden sein kann, zur neuen und wie zuvor beschrieben ermittelten Messgröße M addiert.

Sinkt die Temperatur Tᵥ auf einen Wert, der dem Abschaltpunkt T_{Saus} entspricht oder darunter liegt, so wird der Kompressor automatisch abgeschaltet und die Summe der Messgrößen S_{M} auf Null gesetzt. Ein Einschalten erfolgt erst bei Vorliegen einer vorgegebenen Temperatur des Verdampfers, die dem Einschaltpunkt T_{Sein} entspricht oder darüber liegt.

Gemäß einer Variante mit einem extern geregelten Kompressor erfolgt anstelle der Abschaltung eine Erhöhung des Saugdrucks um z.B. 0,5 bar für einen gewissen Zeitraum, beispielsweise 20 Sekunden.

Gemäß dem zweiten Ausführungsbeispiel ist anstelle der Zeitlogik eine Zählerlogik vorgesehen. Hierbei erfolgt alle 10 Sekunden eine Messung der Temperatur Tᵥ des Verdampfers. Diese gemessene Temperatur Tᵥ wird entsprechend dem in der Figur dargestellten Diagramm (Funktion Multiplikator f über Temperatur Tᵥ), welches in einem Speicher gespeichert ist, in eine gewertete Messgröße M, welche im Prinzip der Messgröße M der letzten Variante des ersten Ausführungsbeispiels entspricht, umgewandelt. Diese gewertete Messgröße M wird zur Summe der vorigen gewerteten Messgrößen S_{M}, die in einem Speicher gespeichert ist, addiert und unter S_{M} abgespeichert. Erreicht die Summe S_{M} einen vorbestimmten Wert, gemäß dem vorliegenden Ausführungsbeispiel 10.000, so wird der Kompressor für 10 Sekunden abgeschaltet und die Summe S_{M} wird auf Null gesetzt.

Bei diesem Ausführungsbeispiel ist im Prinzip die Festlegung eines Abschaltpunktes oder Einschaltpunktes überflüssig, da eine Wertung direkt über das Diagramm bzw. die Funktion berücksichtigt werden kann.

Anstelle der Funktion kann auch eine Tabelle mit Temperaturintervallen ΔT entsprechend der entsprechenden Variante des ersten Ausführungsbeispiels verwendet werden.

Gemäß einer weiteren, auf die zuvor beschriebenen Ausführungsbeispiele anwendbaren Variante erfolgt zusätzlich zur Messung der Verdampfertemperatur Tᵥ eine Messung der Außentemperatur Tₐ. Liegt diese bei oder über z.B. 35°C besteht keine Vereisungsgefahr und die zuvor geschriebene Regelung des Verdampfers oder Kompressors wird so lange außer Kraft gesetzt, bis die Außentemperatur Tₐ z.B. 35°C unterschreitet. Ferner werden sämtliche Messwerte auf Null gesetzt.

Gemäß einer weiteren, ebenfalls auf die zuvor beschriebenen Ausführungsbeispiele anwendbaren Variante erfolgt ferner eine Messung der absoluten Luftfeuchtigkeit vor dem Verdampfer. Liegt diese unterhalb des Taupunktes bei Tᵥ so besteht keine Vereisungsgefahr und die zuvor beschriebene Regelung des Verdampfers oder Kompressors wird so lange außer Kraft gesetzt bis die absoluten Luftfeuchtigkeit den Taupunkt erreicht oder überschreitet.

Gemäß einer weiteren Variante werden die beiden zuvor beschriebenen Varianten miteinander kombiniert.

## Patentansprüche

1. Verfahren zur Regelung einer Klimaanlage mit einem Verdampfer und einem Kompressor, wobei am Verdampfer ein Temperatursensor angeordnet ist, welcher eine Temperatur (Tᵥ) im luftseitigen Bereich des Verdampfers misst und anhand mehrerer dieser zeitlich aufeinanderfolgenden Temperaturmessungen die Regelung der Klimaanlage erfolgt, wobei die Temperaturmessungen in regelmäßigen Zeitabständen erfolgen und die Regelung des Kompressors anhand der Temperatur-Messdaten erfolgt, wenn die gemessenen Temperaturen (Tᵥ) in einem vorgegebenen Temperaturbereich liegen, wobei eine Zeit, während der alle gemessenen Temperaturen (Tᵥ) innerhalb von einem Temperaturbereich (T_{Sein}, T_{Saus}) liegen, für eine vorbestimmte Zeit gespeichert wird und bei erneutem Erreichen einer Temperatur im Temperaturbereich (T_{Sein}, T_{Saus}) zur neu gemessenen Zeit addiert wird, wobei eine Wertung der Zeit unter Berücksichtigung der Temperatur (Tᵥ) anhand einer vorgegebenen Tabelle oder Funktion, welche von der Temperatur (Tᵥ) abhängig ist, erfolgt.

2. Verfahren nach Anspruch 1, **dadurch gekennzeichnet, dass** der Temperaturbereich einen Einschaltpunkt (T_{Sein}) mit einer Temperatur von 5°C +/- 1K und/oder einen Ausschaltpunkt (T_{Saus}) mit einer Temperatur von 2°C +/- 1K aufweist.

3. Verfahren nach einem der vorhergehenden Ansprüche, **dadurch gekennzeichnet, dass** als relevante Temperatur (Tᵥ) für die Regelung der Klimaanlage die minimal gemessene Temperatur (T_{Vmin}) verwendet wird.

4. Verfahren nach einem der vorhergehenden Ansprüche, **dadurch gekennzeichnet, dass** die Zeit unter Berücksichtigung der minimalen gemessenen Temperatur (T_{Vmin}) mit Vergleichswerten verglichen wird und bei Erreichen einer vorbestimmten, für die minimale gemessene Temperatur (T_{Vmin}) relevanten Zeit die Regelung der Klimaanlage erfolgt.

5. Verfahren nach einem der vorhergehenden Ansprüche, **dadurch gekennzeichnet, dass** eine Wertung jeder gemessenen Temperatur (Tᵥ) entsprechend einem in einer vorgegebenen Tabelle gespeicherten Temperaturintervall (ΔT) oder einer in einer vorgegebenen Tabelle gespeicherten Temperatur (T) zu einem gewerteten Messergebnis (M) erfolgt und die einzelnen bewerteten Messergebnisse (M) aufaddiert werden, wobei bei Erreichen der Summe (S_{M}) der gewerteten Messergebnisse (M) eines vorbestimmten Wertes die Regelung der Klimaanlage erfolgt.

6. Verfahren nach Anspruch 5, **dadurch gekennzeichnet, dass** die Summe (S_{M}) der gewerteten Messergebnisse nach einer vorbestimmten Zeit gelöscht wird, wenn über diese vorbestimmte Zeit hinweg keine Änderung der Summe (S_{M}) erfolgt.

7. Verfahren nach Anspruch 5, **dadurch gekennzeichnet, dass** die Summe (S_{M}) der gewerteten Messergebnisse nach einer vorbestimmten Zeit gelöscht wird, wenn über diese vorbestimmte Zeit hinweg keine Änderung der Summe (S_{M}) erfolgt oder die gemessene Temperatur (Tᵥ) über einem vorbestimmten Grenzwert liegt.

8. Verfahren nach einem der vorhergehenden Ansprüche, **dadurch gekennzeichnet, dass** die Außentemperatur gemessen wird und bei Unterschreiten eines Grenzwertes, insbesondere ca. 35°C, die Regelung der Klimaanlage entsprechend einem der vorstehenden Ansprüche erfolgt.

9. Verfahren nach einem der vorhergehenden Ansprüche, **dadurch gekennzeichnet, dass** die absolute Luftfeuchtigkeit gemessen wird und bei Überschreiten eines Grenzwertes, insbesondere des jeweiligen Taupunktes, die Regelung der Klimaanlage entsprechend einem der vorstehenden Ansprüche erfolgt.

10. Verfahren nach einem der vorhergehenden Ansprüche, **dadurch gekennzeichnet, dass** die Regelung der Klimaanlage über den Kompressor erfolgt.

11. Verfahren nach Anspruch 10, **dadurch gekennzeichnet, dass** der Kompressor für eine vorbestimmte Zeit abgeschaltet wird oder der Saugdruck im Kompressor um einen vorbestimmten Wert für eine vorbestimmte Zeit erhöht wird.

## Claims

1. A process for regulating an air conditioner having an evaporator and a compressor, there being positioned on the evaporator a temperature sensor which measures a temperature (Tᵥ) in the air-side area of the evaporator and the air conditioner being regulated using a plurality of these temperature measurements taken consecutively over time, the temperature measurements being taken at regular intervals and the compressor being regulated using the temperature measurement data when the measured temperatures (Tᵥ) lie in a predetermined temperature range, a time during which all measured temperatures (Tᵥ) lie within a temperature range (T_{Sein}, T_{Saus}) being stored for a predetermined time and, when a temperature in the temperature range (T_{Sein}, T_{Saus}) is reached again, being added to the newly measured time, the time being evaluated taking into account the temperature (Tᵥ) using a predetermined table or function which is dependent on the temperature (Tᵥ).

2. A process in accordance with claim 1,
**characterised in that**
the temperature range has a switching-on point (T_{Sein}) with a temperature of 5° ± 1K and/or a switching-off point (T_{Saus}) with a temperature of 2° ± 1K.

3. A process in accordance with one of the preceding claims,
**characterised in that**
the minimum measured temperature (T_{Vmin}) is used as the relevant temperature (Tᵥ) for the regulation of the air conditioner.

4. A process in accordance with one of the preceding claims,
**characterised in that**
the time is compared with comparative values taking into account the minimum measured temperature (T_{Vmin}), and the air conditioner is regulated when a predetermined temperature (T_{Vmin}) relevant for the minimum measured temperature (T_{Vmin}) is reached.

5. A process in accordance with one of the preceding claims,
**characterised in that**
each temperature measured (T_{Vmin}) is evaluated according to a temperature interval (ΔT) stored in a pre-determined table, or a temperature (T) stored in a pre-determined table to produce an evaluated measurement result (M), and the individual evaluated measurement results (M) are added together, the air conditioner being regulated when the sum (S_{M}) of the evaluated measurement results (M) reaches a predetermined value.

6. A process in accordance with claim 5,
**characterised in that**
the sum (S_{M}) of the evaluated measurement results is deleted after a predetermined time if there is no change in the sum (S_{M}) after this predetermined time.

7. A process in accordance with claim 5,
**characterised in that**
the sum (S_{M}) of the evaluated measurement results is deleted after a predetermined time if there is no change in the sum (S_{M}), or the measured temperature (Tᵥ) lies above a predetermined threshold value after this predetermined time.

8. A process in accordance with one of the preceding claims,
**characterised in that**
the exterior temperature is measured and when it falls below a threshold value, in particular 35°C, the air conditioner is regulated in accordance with one of the preceding claims.

9. A process in accordance with one of the preceding claims,
**characterised in that**
the absolute air humidity is measured and if it exceeds a threshold value, in particular the corresponding dew point, the air conditioner is regulated in accordance with one of the preceding claims.

10. A process in accordance with one of the preceding claims,
**characterised in that**
the air conditioner is regulated by the compressor.

11. A process in accordance with claim 10,
**characterised in that**
the compressor is switched off for a pre-determined time or the intake pressure in the compressor is increased above a predetermined value for a predetermined time.

## Revendications

1. Procédé de réglage d'une installation de climatisation avec un évaporateur et un compresseur, sur l'évaporateur étant disposé un capteur de températures qui mesure une température (Tᵥ) dans la zone côté air de l'évaporateur, et le réglage de l'installation de climatisation a lieu au moyen de plusieurs de ces mesures de températures se succédant dans le temps, les mesures de température ayant lieu à des intervalles de temps réguliers, et le réglage du compresseur ayant lieu au moyen des données de mesure de la température, lorsque les températures mesurées (Tᵥ) se situent dans une plage de températures spécifiée, moyennant quoi une durée, pendant laquelle toutes les températures (Tᵥ) mesurées se situent à l'intérieur d'une plage de températures (Tₛₑᵢₙ, Tₛₐᵤₛ), est enregistrée pour un temps prédéfini, et est ajoutée à la durée nouvellement mesurée, lorsqu'une température est de nouveau atteinte dans la plage de températures (Tₛₑᵢₙ, Tₛₐᵤₛ), une évaluation de la durée ayant lieu en tenant compte de la température (Tᵥ) au moyen d'un tableau spécifié ou d'une fonction spécifiée, qui dépend de la température (Tᵥ).

2. Procédé selon la revendication 1, **caractérisé en ce que** la plage de températures comprend un point de connexion (Tₛₑᵢₙ) avec une température de 5 °C +/- 1K et/ou un point de déconnexion (Tₛₐᵤₛ) avec une température de 2 °C +/- 1K.

3. Procédé selon une des revendications précédentes, **caractérisé en ce que** la température minimale mesurée (Tᵥₘᵢₙ) est utilisée en tant que température (Tᵥ) pertinente pour le réglage de l'installation de climatisation.

4. Procédé selon une des revendications précédentes, **caractérisé en ce que** la durée de prise en compte de la température minimale mesurée (Tᵥₘᵢₙ) est comparée à des valeurs de référence, et le réglage de l'installation de climatisation est effectué lorsqu'une durée prédéfinie pertinente pour la température minimale mesurée (Tᵥₘᵢₙ) est atteinte.

5. Procédé selon une des revendications précédentes, **caractérisé en ce qu'**une évaluation de chaque température (Tᵥ) mesurée en fonction d'un intervalle de température (ΔT) enregistré dans un tableau spécifié ou d'une température (T) enregistrée dans un tableau spécifié, est effectuée pour fournir un résultat de mesure (M) évalué, et les résultats de mesure (M) évalués individuels sont ajoutés les uns aux autres, moyennant quoi lorsque la somme (S_{M}) des résultats de mesure (M) évalués d'une valeur prédéfinie est atteinte, le réglage de l'installation de climatisation a lieu.

6. Procédé selon la revendication 5, **caractérisé en ce que** la somme (S_{M}) des résultats de mesure évalués est effacée au bout d'un temps prédéfini, lorsqu'aucune modification de la somme (S_{M}) n'a lieu sur cette période prédéfinie.

7. Procédé selon la revendication 5, **caractérisé en ce que** la somme (S_{M}) des résultats de mesure évalués est effacée au bout d'un temps prédéfini, lorsqu_{'}aucune modification de la somme (S_{M}) n'a lieu sur cette période prédéfinie, ou si la température mesurée (Tᵥ) dépasse une valeur de seuil prédéfinie.

8. Procédé selon une des revendications précédentes, **caractérisé en ce que** la température externe est mesurée, et si elle se trouve en dessous d'une valeur de seuil, en particulier environ 35 °C, le réglage de l'installation de climatisation a lieu selon une des revendications précédentes.

9. Procédé selon une des revendications précédentes, **caractérisé en ce que** l'humidité de l'air absolue est mesurée et en cas de dépassement d'une valeur de seuil, en particulier du point de rosée respectif, le réglage de l'installation de climatisation a lieu selon une des revendications précédentes.

10. Procédé selon une des revendications précédentes, **caractérisé en ce que** le réglage de l'installation de climatisation est effectué par l'intermédiaire du compresseur.

11. Procédé selon la revendication 10, **caractérisé en ce que** le compresseur est déconnecté pendant une période prédéfinie ou la pression d'aspiration dans le compresseur est augmentée d'une valeur prédéfinie pour une période prédéfinie.
